# EUROPEAN PATENT SPECIFICATION

(11) **EP 3 354 621 B1**
(45) Date of publication and mention of the grant of the patent: **04.09.2024**
(21) Application number: 16849061.3
(22) Date of filing: 26.09.2016
(51) Int. Cl.: C09C 1/40, C01F 7/785, C08K 3/26

(54) **HYDROTALCITE AND METHOD FOR PRODUCING SAME**
HYDROTALCIT UND VERFAHREN ZUR HERSTELLUNG DAVON
HYDROTALCITE ET SON PROCÉDÉ DE PRODUCTION

(30) Priority: 24.09.2015 KR 20150135290
(43) Date of publication of application: 01.08.2018
(73) Proprietor: Dansuk Industrial Co., Ltd., Siheung-si, Gyeonggi-do 15087 (KR)
(72) Inventor: LIM, Byung Gil, Incheon 21996 (KR); MUN, Min Ho, Seoul 03915 (KR); JO, Cho Won, Seoul 02461 (KR)
(74) Representative: BiiP bv
(86) International application number: PCT/KR2016/010772
(87) International publication number: WO 2017/052336

(56) References cited:
- EP-A1- 1 462 475
- EP-B1- 1 462 475
- WO-A1-2008/050927
- WO-A1-2012/081770
- KR-A- 20040 084 758
- KR-A- 20050 010 610
- KR-A- 20100 049 196
- KR-A- 960 704 801
- KR-B1- 100 775 602
- US-A1- 2010 123 101

## Description

### TECHNICAL FIELD

The present invention relates to hydrotalcite particles and a process for producing the same. More particularly, the present invention relates to a process for preparing a hydrotalcite particles, which is unique in that the particle shape and crystallinity thereof are controlled, the length and area of the plate layer increase, the average primary particle diameter is 150 to 250 nm, the average secondary particle diameter is 1 to 2 *µ*m, and they have the height ratio of 2.10 to 2.65:1 between the height of the intensity at the first peak (2θ= 11.4 to 12.0°) in the X-ray diffraction pattern, which means the distance between the upper plate layer and the lower plate layer of the hydrotalcite particles made of magnesium hydroxide and aluminum hydroxide, and the height of the intensity at the second peak (2θ= 23 to 24 °) in the X-ray diffraction pattern, which means the distance between the interlayer anions and the plate layer of the hydrotalcite particles made of magnesium hydroxide and aluminum hydroxide, and a process for preparing the same.

### BACKGROUND ART

Hydrotalcite particles have been known that the structure thereof composes of magnesium hydroxide and aluminum hydroxide, and they contain a carbonate ion (CO₃⁻²) and crystalized water in the interlayer. Such a hydrotalcite particles have capability of capturing hydrogen chloride or chlorine which is generated by degradation of polyvinyl chloride (PVC) in the PVC resin, and water molecules (H₂O) and carbonate ions (CO₃⁻²) between the layers are discharged in a form of CO₂ gas and/or water molecules.

Due to such properties, hydrotalcite particles have been widely used as conventional antacids, neutralizers for Ziegler-Natta remnants of polyolefin resins, and stabilizers for chlorinated resins.

In recent years, techniques for atomizing the size of particles to improve hydrothermal degradation resistance and fluidity of hydrotalcite particles have been disclosed (see, for example, the Patent Document 1 to 3). Particularly, it is disclosed that the smaller the particle diameter, the larger the specific surface area and the better the heat resistance.

### [Patent Document]

Patent Document 1: Korean Laid-Open Patent Publication No. 10-2012-0123547A1.
Patent Document 2: Korean Laid-Open Patent Publication No. 10-2014-0138613A1
Patent Document 3: Korean Laid-Open Patent Publication No. 10-2014-0138628A1

WO 2012/081770 discloses a process for the preparation of hydrotalcite particles capable of improving physical properties such as heat resistance of synthetic resins.

### DISCLOSURE OF THE INVENTION

### Technical to be Solved by the Invention

The conventional hydrotalcite particles have a particle diameter of 100 to 250 nm, and a ratio of the height of the first peak (2θ= 11.4 to 11.7°) to that of the second peak (2θ=23 to 24°) is 2.0 to 2.1, and such hydrotalcite particles cannot be said to have sufficient thermal heat resistance in the resin.

### TECHNICAL SOLUTION

The inventors of the invention have conducted further studies on the structure of the layered compound, in order to improve the thermal resistance of the hydrotalcite particles, and as a result, they found that the hydrotalcite particles are formed differently in their structures according to the peak ratio between the peak intensity of the upper plate layer to the lower plate layer of the unit structure on the XRD diffraction pattern and that of the interlayer material to the plate layer depending on the temperature and pressure at the time of synthesis. Further, in X-ray diffraction analysis, when the hydrotalcite particles having the intensity ratio between the peaks indicating the distance (intensity) of the upper plate layer to the lower plate layer and the peaks indicating the distance (intensity) of the interlayer material to the plate layer are 2.1 or more, the hydrotalcite particles are larger than that produced by the conventional method, and have shown excellent heat resistance.

Thus, in a process for preparing the hydrotalcite particles which comprises by reacting the a divalent metal element, a trivalent metal element, and a carbonate ion according to the conventional hydrothermal method, aluminum hydroxide ion which is obtained from an aluminum compound by reacting an aluminum source with an aqueous sodium hydroxide solution is reacted with the aqueous magnesium ion solution which is obtained from dissolving the magnesium source in water and an aqueous solution, and an aqueous carbonate ion solution ionized and an aqueous alkali solution in which the aluminum hydroxide is dissolved to obtain an initial state of the hydrotalcite particles. The mixture containing the resulting initial state of the hydrotalcite particles was stirred at a high speed to obtain the hydrotalcite particles whose crystalline structures are slightly grown. After the mixture was aged, a reaction solution of a small amount of reaction mixture of magnesium source compound and sodium hydroxide was added to form an atmosphere capable of slightly developing the plate of the hydrotalcite, and/or the inert gas before the hydrothermal synthesis reaction is supplied at a constant pressure in the reactor to further increase the pressure during the hydrothermal synthesis reaction so that the ratio between the height of peak of the upper plate layer to the lower plate layer and height of the interlayer material to the plate layer, that is, the XRD peak intensity ratio is 2.10 to 2.65, which is different from that obtained by the conventional method, and that hydrotalcite having such a peak ratio is excellent in heat resistance. The present invention has been accomplished based on this finding.

### Advantageous Effects of Invention

According to the present invention, the hydrotalcite particles can be easily synthesized, the reaction rate is fast, the hydrotalcite particles are homogeneous, the formulation with a resin is ease because the size thereof is 250 nm or less, and the X-ray diffraction pattern, hydrotalcite having a ratio of the height of the first peak (2θ= 11.4 to 11.7°) which is owing to the distance of the upper plate layer to the lower plate layer to the height of the second peak (2θ= 23 to 24°) which is owing to the distance of the interlayer materials to the plate layer is in the range of 2.10 to 2.65. The hydrotalcite thus produced can be used as an anti-deterioration agent for PVC and can impart excellent heat resistance when used.

### Brief Description of Drawings

Fig. 1 is a schematic view showing a reaction and layered structure for forming hydrotalcite by reacting magnesium chloride, aluminum hydroxide and carbonate ions as an example of the present invention.

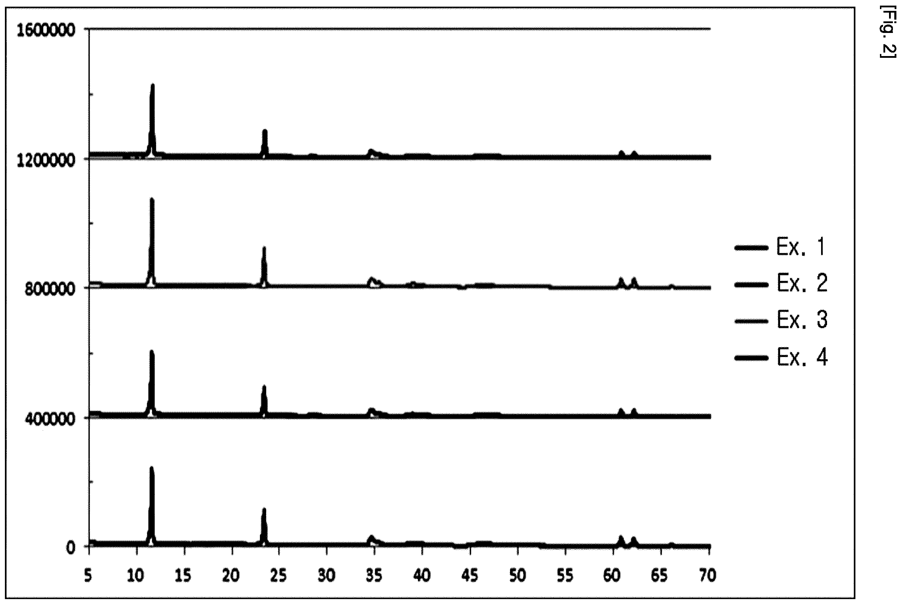

Fig. 2 is a diagram showing X-ray diffraction intensity of the hydrotalcite particles produced in examples 1 to 4.

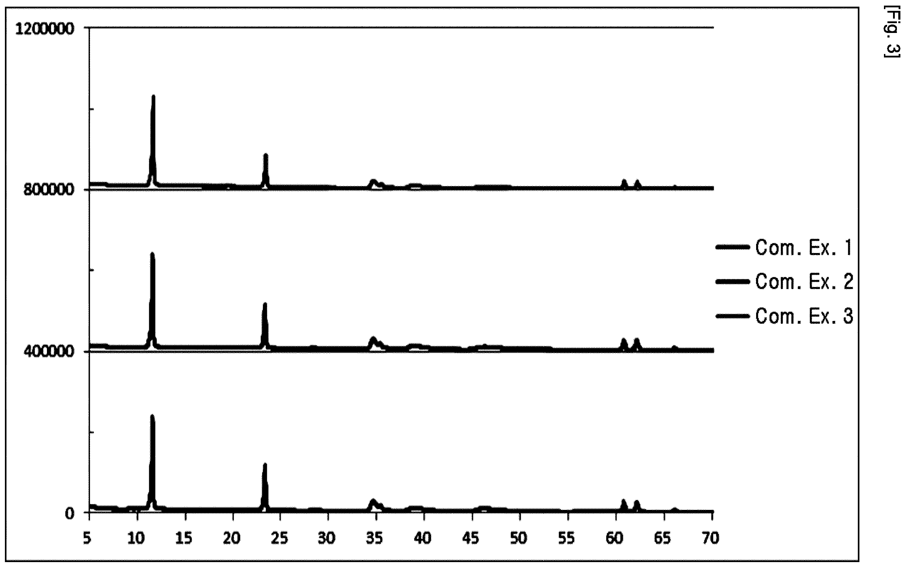

Fig. 3 is a diagram showing X-ray diffraction intensity of the hydrotalcite particles prepared in comparative examples 1 to 3.
Fig. 4 is a photograph showing the degree of deterioration of the hydrotalcite particles produced in Examples 1 to 4.
Fig. 5 is a photograph showing the degree of deterioration of the hydrotalcite particles produced in comparative examples 1 to 3.

**Description of Embodiment**

The present invention provides the hydrotalcite particles of claim 1 and a process for its preparation.
(1) The chemical structure formula:

   [(Mg)_{Y}(Zn)_{Z}]_{1-X}(Al)_{X}(OH)₂(CO₃²⁻)_{(x)/2}·nH₂O

   wherein, x, y, z, and n are values which satisfy the following expressions:
   0.2≤x<0.4, y+z=1, 0.7≤y≤1, 0≤z≤0.3 and n is a value of 0≤n<1;
(2) The hydrotalcite particles have the average primary particle diameter of 150 to 250 nm.
(3) The hydrotalcite particles have the average secondary particle diameter (d₅₀) of 1 to 2.5*µ*m.
(4) The hydrotalcite particles have a specific surface area measured by a BET method of 5 to 40 m²/g.
(5) Hydrotalcite particles have an X-ray diffraction pattern in which the first peak (2θ) at a distance of the lower plate layer to the upper plate layer is 11.4 to 11.7°, the second peak (2θ) at a distance of the interlayer material to the plate layer is 23 to 24°, and the ratio of the distance of height of the first peak to that of the second peak is 2.10 to 2.65.

### Detailed Description of Invention

Hereinafter, the present invention will be described in detail.

The hydrotalcite particles produced by the present invention have the following characteristics.
(1) General structure formula

   [(Mg)_{Y}(Zn)_{Z}]_{1-X}(Al)_{X}(OH)₂(CO₃²⁻)_{(x)/2}·nH₂O

   wherein, x, y, z, and n are values which satisfy the following expressions:
   0.2≤x<0.4, y+z=1, 0.7≤y≤1, 0≤z≤0.3, and n is a value of 0≤n<1
(2) The hydrotalcite particles have the average primary particle diameter of 150 to 300 nm, preferably 150 to 250 nm.
(3) The hydrotalcite particles have the average secondary particle diameter, d₅₀, of 0.9 to 2.5*µ*m, preferably 1 to 2*µ*m.
(4) The hydrotalcite particles have a specific surface area measured by a BET method of 5 to 40 m²/g, preferably 8 to 15*µ*m.
(5) Hydrotalcite particles have an X-ray diffraction pattern in which the first peak (2θ) at a distance of the lower plate layer to the upper plate layer is 11.4 to 11.7°, the second peak(2θ) at a distance of the interlayer material to the plate layer is 23 to 24°, and the ratio of the distance of height of the first peak to that of the second peak is 2.10 to 2.65.

In the present invention, raw materials used for producing hydrotalcite particles on an industrial scale include aluminum hydroxide as an aluminum source and magnesium chlorides thereof as a magnesium source.

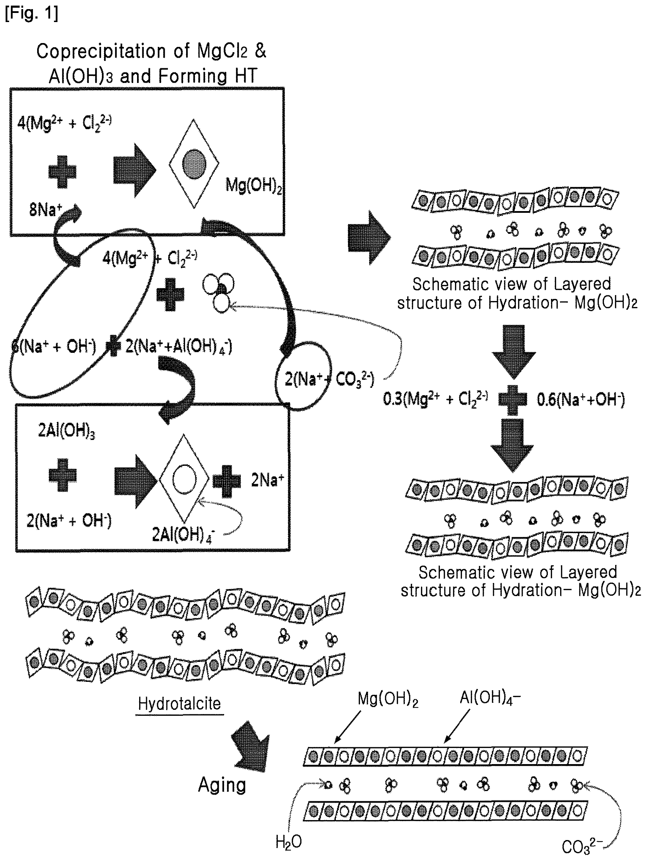

The raw materials as described above are prepared, and the prepared divalent metal and the trivalent metal raw material are dispersed in water and then dissolved. The mixing ratio for the reaction of the raw metals is in accordance with the conventional method. The selection of the raw materials can be selected from conventionally known raw materials, and a chloride, sulfuric oxide, nitrate, etc. of a divalent metal can be selected, and sulfur oxides, chlorides, and nitrates of a trivalent metal are selected. Conventionally, a divalent metal compound, a trivalent metal compound, a carbonate compound and a hydroxide of alkali metal are mixed and then subjected to a co-precipitation reaction and a hydrothermal synthesis reaction. In the present invention, the aluminum source compound such as aluminum hydroxide or aluminum oxide is first dissolved in an aqueous sodium hydroxide solution to convert it to an aluminum hydroxide ion [Al(OH)₄⁻]. The other hand, in a separate reaction vessel, an aqueous solution in which magnesium source compound such as magnesium chloride or magnesium sulfate is dissolved is reacted with an aluminum hydroxide ion, aqueous sodium carbonate or sodium bicarbonate solution and an aqueous sodium hydroxide solution to form momentarily composite layer of magnesium hydroxide and aluminum hydroxide. At this time, carbonate ions and water are positioned between the layers becomes. (cf. upper right of Fig. 1).

These reactions are shown in the following reaction scheme as an example of magnesium chloride and aluminum hydroxide as raw materials.

4MgCl₂ + 2Al(OH)₃ + 6NaOH + Na₂CO₃ + nH₂O → [Mg₄Al₂(OH)₁₂]²⁺CO₃⁻²·nH₂O + 8NaCl

When the reaction mixture is stirred at a temperature of 80°C or higher for about 30 to 120 minutes at a high speed, a crystallization reaction is induced and completed. Then, 0.2 to 0.3 mole of a magnesium source and 0.4 to 0.6 mole of an aqueous sodium hydroxide solution are added to the mixture and mixed to prepare a first reaction product. With this addition, the layer state of hydrotalcite particles obtained above is further developed (adhesion of magnesium hydroxide at the right end in the schematic diagram at the lower right of the reference figure 1).

The hydrotalcite particles of the layered structure thus formed are allowed to stand and aged. The time period of the standing and aging time is not particularly limited, but is suitable for the time generally used in the art, that is, about 2 hours. By this process, the layered structure of hydrotalcite obtained above is fixed in a well-arranged state having carbonate ions and water molecules between the plate layers.

The hydrotalcite of the layered structure thus formed is reacted (aged) in a high temperature, high pressure atmosphere. It is preferable to increase the reaction pressure before the aging reaction. Such an increase in the reaction pressure can be achieved by injecting an inert gas such as nitrogen gas into the reactor to increase the reactor internal pressure to 2 to 5 bar higher. When the aging reaction is carried out under the condition of the elevated reaction pressure, the peak ratio between the peak height owing to the upper plate layer to the layer plate layer and the peak height owing to interlayer material and the plate on the XRD diffraction pattern is in the range of 2.10 to 2.65, and the hydrotalcite particles having such a peak ratio are excellent in heat resistance.

The reaction time is about 2 to 12 hours, preferably 3 to 8 hours. If the reaction time is 3 hours or less, the reaction does not sufficiently take place or the heat resistance of the resultant hydrotalcite is adversely affected.

By this process, the layered structure of hydrotalcite particles obtained above is fixed in a well-arranged state having carbonate ions and water molecules between the plate layers.

The hydrotalcite particles obtained in the above are obtained as a state of the fine powder, but they may be pulverized further. The pulverization may be carried out by a known method such as a hammer mill. The obtained hydrotalcite particles have a great influence on heat resistance according to its final average primary particle size. The hydrotalcite particles obtained according to the invention has an average primary not more than 250 nm, preferably not more than 150 to 250 nm, and are particularly excellent in heat resistance.

The X-ray diffraction patterns of the hydrotalcite particles of the general formula (1) having the physical properties described above show that the ratio of the height of the first peak (2θ= 11.4 to 11.7°) as the layer spacing) and the second peak (2θ= 23 to 24°) becomes 2.10 to 2.65.

The hydrotalcite particles obtained above can be used by surface treatment with an alkali metal salt of a higher alkyl aryl sulfonic acid such as stearic acid or an alkali metal salt of an oleic acid, a surfactant or the like in the art.

Hereinafter, the resin composition containing the above-mentioned hydrotalcite particles of the present invention will be described.

In the embodiment of the present invention, about 0.001 to 30 parts by weight, preferably about 0.001 to 20 parts by weight, more preferably about 0.001 to 10 parts by weight of the specific hydrotalcite particles are contained in the halogen-containing polyolefin resins such as vinyl chloride resin, and the composition of the present invention can be thus provided.

In the practice of the present invention, other additives for polyolefin may be added in addition to the above-mentioned specific hydrotalcite particles formulations.

### Experimental example

The Geer oven thermal stability test of the hydrotalcite obtained in the following examples and comparative examples was carried out according to the conventional method.

That is, 1.8 parts by weight of hydrotalcite particles obtained in examples and comparative examples, 1.2 parts by weight of zinc stearate, and 50 parts by weight of DINP as a plasticizer were uniformly mixed on the basis of the weight ratio of PVC resin 100 parts by weight, kneaded for 5 minutes to prepare a sheet having a thickness of 0.6 mm and used in a thermal stability test.

The evaluation of the performance of a conventional stabilizer for polyvinyl chloride resin tests the degree of heat distortion, coloration and deterioration. In the Geer oven thermal stability test, after the PVC processing, the workpiece exposed to the air is subjected to heat stress, degree of coloration and degree of carbonization under severe conditions and evaluated.

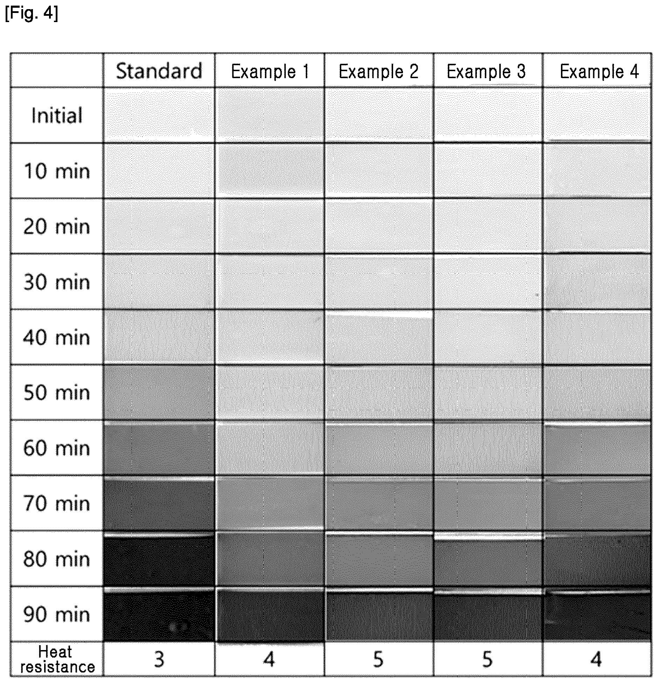

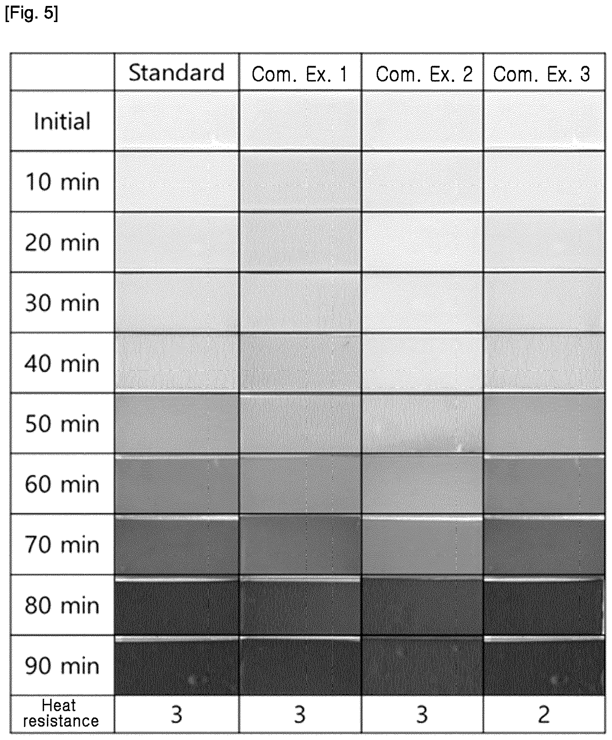

Eleven (11) specimens each having a size of 1 cm x 1.5 cm in width and length were prepared using the sheet prepared above, and then placed in a Geer oven at 190 °C and taken out every 10 minutes to measure the degree of deterioration of the sheet. The photographic images of the degree of deterioration of the specimens of examples and comparative examples are shown in Fig. 4 to 5.

### Example

Hereinafter, the present invention will be described in more detail by way of examples.

### Example 1

An aqueous solution of 12.84 mol of magnesium chloride was added to the 5 liter tank, 2.5 kg of distilled water was added therein, and 6.04 mol of aluminum hydroxide was added and dispersed. To this, 19.34 mol of the caustic soda was added and dissolved while stirring at 80 °C for 30 to 60 minutes, followed by cooling for 1 hour.

To an 8 L tank for dissolving sodium carbonate, 6.0 kg of distilled water was added, and 3.17 mol of sodium carbonate was added and dissolved.

1.5 kg of water was added to 20 L of the co-precipitation reaction tank, and an aqueous magnesium chloride solution prepared above, aluminum hydroxide and aqueous caustic soda solution were simultaneously added thereto for 1 hour while stirring, thereby reacting. The aqueous magnesium chloride solution, the aluminum hydroxide, and the aqueous caustic soda solution are reacted for 1 hour while performing the first co-precipitation reaction. After the completion of the reaction, the aqueous sodium carbonate solution is slowly added for 1 hour to carry out a second co-precipitation reaction. After the completion of the second secondary precipitation reaction, the reaction product was transferred to a 25 L high-temperature high-pressure aging reactor, and 0.2 mol of magnesium chloride and 0.4 mol of sodium hydroxide were added thereto, aged for 2 hours and then reacted at 160 °C for 6 hours. After completion of the reaction, the mixture was cooled to 80 to 90 °C, 44.4 g of stearic acid was added, and the mixture was stirred for 1 hour to carry out the surface treatment. The slurry is then filtered, and the obtained cake is dispersed in 4 L distilled water and filtered. This step was repeated three times to sufficiently remove reaction by-products, and the obtained cake was dried in a hot-air drier at 105 °C for 12 hours or longer and pulverized to obtain a hydrotalcite powder.

The hydrotalcite thus obtained was analyzed, and the results reveal that its formula was Mg_{0.68}Al_{0.32}(OH)₂(CO₃)_{0.16}*·*0.55H₂O, the specific surface area was 15 m²/g and the average secondary particle diameter was D₅₀ 1.02*µ*m/D₁₀₀ 5*µ*m, the average primary particle size was 154 nm, and the XRD peak ratio of the particles was 2.1.

### Example 2

An aqueous solution of 12.84 mol of magnesium chloride was added to a raw material tank having a capacity of 5L. And 2.5 kg of distilled water was added to 5 L of aluminum hydroxide dissolution tank, 6.04 mol of aluminum hydroxide was added and dispersed. To this, an aqueous 19.34 mol of caustic soda solution was added and dissolved while stirring at 80 °C for 30 to 60 minutes, followed by cooling for 1 hour.

To an 8 L tank for dissolving sodium carbonate, 6.0 kg of distilled water was added, and 3.17 mol of sodium carbonate was added and dissolved.

1.5 kg of water was added to 20 L of the co-precipitation reaction tank, and the aqueous magnesium chloride solution prepared above, aluminum hydroxide and aqueous caustic soda solution were simultaneously added thereto for 1 hour while stirring, thereby reacting. The aqueous magnesium chloride solution, the aluminum hydroxide, and the aqueous caustic soda solution are reacted for 1 hour to carry out the first co-precipitation reaction. After the completion of the reaction, the aqueous sodium carbonate solution is slowly added for 1 hour to carry out a second co-precipitation reaction. After completion of the second co-precipitation reaction, the reaction product was transferred to a 25 L high-temperature and high-pressure aging reactor, and 2 bar of inert gas (N₂) was injected and reacted at 160 °C, 9.3 bar pressure for 6 hours.

After completion of the high-temperature and high-pressure reaction, the mixture was cooled to 80 to 90 ° C, 44.4 g of stearic acid was added, and the mixture was stirred for 1 hour to carry out the surface treatment. The slurry is then filtered, and the obtained cake is dispersed in 4 L distilled water and filtered. This step was performed three times to sufficiently remove reaction by-products, and the obtained cake was dried in a hot-air drier at 105 °C for 12 hours or longer and pulverized to obtain a hydrotalcite powder.

The obtained hydrotalcite particles had a specific surface area of 12.7 m²/g and an average secondary particle size of D₅₀ 1.5*µ*m/D₁₀₀ 6*µ*m. The average primary particle size was 196 nm and the XRD peak ratio was 2.19.

### Example 3

The same procedure was carried out except that the inert gas injection pressure in Example 2 was substituted with 3 bar. The obtained hydrotalcite particles had a specific surface area of 11.1 m²/g and an average secondary particle size of D₅₀ 1.98*µ*m/D₁₀₀ 7*µ*m. The average primary particle size was 235 nm and the XRD peak ratio was 2.24.

### Example 4

The same procedure was carried out except that the inert gas injection pressure in Example 2 was substituted with 5 bar. The specific surface area of hydrotalcite obtained was 10.3 m'/g, and the average secondary particle size was D₅₀ 2.43*µ*m/D₁₀₀ 8*µ*m. The average primary particle size was 293 nm and the XRD peak ratio was 2.62.

### Comparative Example 1

The same procedure was performed except that the inert gas was injected in Example 2. The obtained hydrotalcite particles had a specific surface area of 16.2 m²/g and an average secondary particle size of D₅₀ 0.89*µ*m/D₁₀₀ 4*µ*m. The average primary particle size was 125 nm and the XRD peak ratio was 2.00.

### Comparative Example 2

The same procedure was performed except that the inert gas was injected in Example 2. The obtained hydrotalcite particles had a specific surface area of 14.4 m²/g and an average secondary particle size of D₅₀ 1.23*µ*m/D₁₀₀ 6*µ*m. The average primary particle size was 179 nm and the XRD peak ratio was 2.04.

### Comparative Example 3

The same procedure was performed except that injection of the inert gas in Example 2 was substituted with at 7 bar., an inert gas was injected. The obtained hydrotalcite particles had a specific surface area of 9.8 m²/g and an average secondary particle size of D₅₀ 2.28*µ*m/D₁₀₀ 7*µ*m. The average primary particle size was 320 nm and the XRD peak ratio was 2.7.

**[Table 1]**

| | Example 1 | Example 2 | Example 3 | Example 4 |
|---|---|---|---|---|
| MgCl₂ | 12.84 mol | 12.84 mol | 12.84 mol | 12.84 mol |
| Al(OH)₃ | 6.04 mol | 6.04 mol | 6.04 mol | 6.04 mol |
| NaOH | 19.34 mol | 19.34 mol | 19.34 mol | 19.34 mol |
| Na₂CO₃ | 1 mol | 1 mol | 1 mol | 1 mol |
| reaction atmosphere | Supplement of Mg ion and NaOH | N₂, 2 bar | N₂, 3 bar | N₂, 5 bar |
| pressure in reactor | 6.7 bar | 9.9 bar | 10.8 bar | 13.2 bar |
| reaction temperature | 160 °C | 160 °C | 160 °C | 160 °C |
| reaction time | 6hr | 6hr | 6hr | 6hr |
| average primary particle diameter | 154 nm | 195 nm | 235 nm | 293 nm |
| average secondary particle diameter | 1.02 *µ*m | 1.5 *µ*m | 1.98 *µ*m | 2.43 *µ*m |
| Maximum secondary particle diameter | 5 *µ*m | 6 *µ*m | 7 *µ*m | 8*µ*m |
| specific surface area | 15 m²/g | 12.7 m²/g | 11.1 m²/g | 10.3 m²/g |
| XRD peak ratio | 2.10 | 2.19 | 2.24 | 2.62 |
| heat resistance | 4 | 5 | 5 | 4 |

**[Table 2]**

| | Comp. Example 1 | Comp. Example 2 | Comp. Example 3 |
|---|---|---|---|
| MgCl₂ | 12.84 mol | 12.84 mol | 12.84 mol |
| Al(OH)₃ | 6.04 mol | 6.04 mol | 6.04 mol |
| NaOH | 19.34 mol | 19.34 mol | 19.34 mol |
| Na₂CO₃ | 1 mol | 1 mol | 1 mol |
| reaction atmosphere | - | - | N₂, 7 bar |
| pressure in reactor | 6.7 bar | 8.4 bar | 15.2 bar |
| reaction temperature | 160 °C | 17°C | 160 °C |
| reaction time | 6hr | 6hr | 6hr |
| average primary particle diameter | 125 nm | 179 nm | 320 nm |
| average secondary particle diameter | 0.89 *µ*m | 1.23 *µ*m | 2.28 *µ*m |
| Maximum secondary particle diameter | 4 *µ*m | 6 *µ*m | 7 *µ*m |
| specific surface area | 16.2 m²/g | 14.4 m²/g | 9.8 m²/g |
| XRD peak ratio | 2.0 | 2.04 | 2.7 |
| heat resistance | 3 | 3 | 2 |

As shown in the table, the height of the first peak (2θ= 11.4 to 11.7°) between the plate layers on the X-ray diffraction pattern according to the present invention and the height of the second peak (2θ= 23 to 24°) having a height ratio of 2.10 to 2.65 is excellent in heat resistance. In addition, it is advantageous to obtain the desired hydrotalcite by injecting nitrogen gas into the reactor to raise the reaction pressure by 2 to 5 bar.

## Claims

1. A hydrotalcite particles **characterized by** the following (1) to (5):
(1) General chemical structure formula
[(Mg)_{Y}(Zn)_{Z}]_{1-X}(Al)_{X}(OH)₂(CO₃²-)_{(x)/2}·nH₂O
wherein, x, y, z, and n are values which satisfy the following expressions:
0.2≤x<0.4, y+z=1, 0.7≤y≤1, 0≤z≤0.3, and 0≤n<1 .
(2) the hydrotalcite particles have the average primary particle diameter of 150 to 250 nm;
(3) the hydrotalcite particles have the average secondary particle diameter (d50) have 1 to 2.5 *µ*m;
and the hydrotalcite particles having the following characteristics:
(4) the hydrotalcite particles have a specific surface area measured by BET method of 5 to 40 *µ*m/g;
(5) the hydrotalcite particles have an X-ray diffraction pattern in which the first peak (2θ) at a distance of the lower plate layer to the upper plate layer is 11.4 to 11.7 °, the second peak (2θ) at a distance of the interlayer material to the plate layer is 23 to 24 °, and the ratio of the distance of height of the first peak to that of the second peak is 2.10 to 2.65.

2. Process for preparing hydrotalcite particles of the following (1) to (5), which is charactering by dissolving an aluminum compound of an aluminum source in an aqueous sodium hydroxide solution to form an aluminum hydroxide ion; reacting magnesium ion which is obtained from dissolving the magnesium source in water with an aluminum hydroxide ion as obtained in above in a manner of liquid phase reaction; reacting the resulted mixture with the an aqueous carbonate solution to obtain hydrotalcite particles in an initial state; stirring the mixture at high speed to obtain more advanced hydrotalcite; and allowing the hydrotalcite to stand; and 0.2 to 0.3 mol of an initially added magnesium source and 0.4 to 0.6 mol of an initially added sodium hydroxide added additionally to slightly increase the plate size of the hydrated magnesium hydroxide; the hydrotalcite particles having:
(1) General chemical structure formula
[(Mg)_{Y}(Zn)_{Z}]_{1-X}(Al)_{X}(OH)₂(CO₃²⁻)_{(x)/2}·nH₂O,
wherein, x, y, z, and n are values which satisfy the following expressions:
0.2≤x<0.4, y+z=1, 0.7≤y≤1, 0≤z≤0.3, and 0≤n<1
(2) an average primary particle diameter of 150 to 300 nm;
(3) an average secondary particle diameter, d₅₀, of 0,9 to 2.5 *µ*m;
(4) a specific surface area measured by BET method of 5 to 40 m²/g;
(5) an X-ray diffraction pattern in which the first peak (2θ) at a distance of the lower plate layer to the upper plate layer is 11.4 to 11.7 °, the second peak (2θ) at a distance of the interlayer material to the plate layer is 23 to 24 °, and the ratio of the distance of height of the first peak to that of the second peak is 2.10 to 2.65.

3. Process for preparing hydrotalcite particles of the following (1) to (5), which is charactering by dissolving an aluminum compound of an aluminum source in an aqueous sodium hydroxide solution to form an aluminum hydroxide ion; reacting magnesium ion which is obtained from dissolving the magnesium source in water with an aluminum hydroxide ion as obtained in above in a manner of liquid phase reaction; reacting the resulted mixture with the an aqueous carbonate solution to obtain hydrotalcite particles in an initial state; stirring the mixture at high speed to obtain more advanced hydrotalcite; and allowing the hydrotalcite to stand; and the mixture is aged with adding a 2 to 5 bar of inert gas; the hydrotalcite particles having:
(1) General chemical structure formula
[(Mg)_{Y}(Zn)_{Z}]_{1-X}(Al)_{X}(OH)₂(CO₃²⁻)_{(x)/2}*·*nH₂O,
wherein, x, y, z, and n are values which satisfy the following expressions:
0.2≤x<0.4, y+z=1, 0.7≤y≤1, 0≤z≤0.3, and 0≤n<1
(2) an average primary particle diameter of 150 to 300 nm;
(3) an average secondary particle diameter, d₅₀, of 0,9 to 2.5 *µ*m;
(4) a specific surface area measured by BET method of 5 to 40 m²/g;
(5) an X-ray diffraction pattern in which the first peak (2θ) at a distance of the lower plate layer to the upper plate layer is 11.4 to 11.7°, the second peak (2θ) at a distance of the interlayer material to the plate layer is 23 to 24 °, and the ratio of the distance of height of the first peak to that of the second peak is 2.10 to 2.65.

## Patentansprüche

1. Hydrotalcit-Partikel, **gekennzeichnet durch** das Folgende (1) bis (5):
(1) die allgemeine Formel der chemischen Struktur
[(Mg)_{Y}(Zn)_{Z}]_{1-X}(Al)_{X}(OH)₂(CO₃²⁻)_{(X)/2}·nH₂O
wobei, x, y, z, und n Werte sind, welche die folgenden Ausdrücke erfüllen:
0,2≤x<0,4, y+z=1, 0,7≤y≤1, 0≤z≤0,3, und 0≤n<1.
(2) die Hydrotalcit-Partikel den mittleren Primärpartikeldurchmesser von 150 bis 250 nm aufweisen;
(3) die Hydrotalcit-Partikel den mittleren Sekundärpartikeldurchmesser (d50) von 1 bis 2,5 µm aufweisen;
und die Hydrotalcit-Partikel die folgenden Eigenschaften aufweisen:
(4) die Hydrotalcit-Partikel eine spezifische Oberfläche, durch das BET-Verfahren gemessen, von 5 bis 40 µm/g aufweisen;
(5) die Hydrotalcit-Partikel ein Röntgenbeugungsmuster aufweisen, in dem die erste Spitze (2θ) in einem Abstand von der unteren Plattenschicht zur oberen Plattenschicht 11,4 bis 11,7 ° beträgt; die zweite Spitze (2θ) in einem Abstand vom Zwischenschichtmaterial zur Plattenschicht 23 bis 24 ° beträgt; und das Verhältnis des Abstands einer Höhe der ersten Spitze zu jener der zweiten Spitze 2,10 bis 2,65 beträgt.

2. Prozess zur Herstellung von Hydrotalcit-Partikeln von Folgendem (1) bis (5), welcher durch Auflösen einer Aluminumverbindung einer Aluminumquelle in einer wässrigen Natriumhydroxidlösung gekennzeichnet ist, um ein Aluminumhydroxidion zu bilden; Reagieren eines Magnesiumions, welches aus dem Auflösen der Magnesiumquelle in Wasser mit einem Aluminumhydroxidion, wie auf die obige Weise einer Flüssigphasenreaktion erhalten wird; Reagieren des resultierenden Gemisches mit einer wässrigen Carbonatelösung, um Hydrotalcite-Partikel in einem ursprünglichen Zustand zu erhalten; Rühren des Gemisches mit hoher Geschwindigkeit, um fortgeschrittenes Hydrotalcit zu erhalten; und Erlauben, dass das Hydrotalcit steht; und 0,2 bis 0,3 Mol einer ursprünglich hinzugefügten Magnesiumquelle und 0,4 bis 0,6 Mol eines ursprünglich hinzugefügten Natriumhydroxids, das zusätzlich hinzugefügt wird, um die Plattengröße des hydrierten Magnesiumhydroxids leicht zu erhöhen; wobei die Hydrotalcit-Partikel aufweisen:
(1) die allgemeine Formel der chemischen Struktur
[(Mg)_{Y}(Zn)_{Z}]_{1-X}(Al)_{X}(OH)₂(CO₃²⁻)_{(x)/2}·nH₂O,
wobei, x, y, z, und n Werte sind, welche die folgenden Ausdrücke erfüllen:
0,2≤x<0,4, y+z=1, 0,7≤y≤1, 0≤z≤0.3, und 0≤n<1
(2) einen mittleren Primärpartikeldurchmesser von 150 bis 300 nm;
(3) einen mittleren Sekundärpartikeldurchmesser d₅₀, von 0,9 bis 2,5 µm;
(4) eine spezifische Oberfläche, durch das BET-Verfahren gemessen, von 5 bis 40 m²/g;
(5) ein Röntgenbeugungsmuster, in dem die erste Spitze (2θ) in einem Abstand von der unteren Plattenschicht zur oberen Plattenschicht 11,4 bis 11,7 ° beträgt, die zweite Spitze (2θ) in einem Abstand vom Zwischenschichtmaterial zur Plattenschicht 23 bis 24 ° beträgt, und das Verhältnis des Abstands einer Höhe der ersten Spitze zu jener der zweiten Spitze 2,10 bis 2,65 beträgt.

3. Prozess zur Herstellung von Hydrotalcit-Partikeln durch das Folgende (1) bis (5), welcher durch Auflösen einer Aluminumverbindung einer Aluminumquelle in einer wässrigen Natriumhydroxidlösung gekennzeichnet ist, um ein Aluminumhydroxidion zu bilden; Reagieren eines Magnesiumions, welches aus dem Auflösen der Magnesiumquelle in Wasser mit einem Aluminumhydroxidion, wie auf die obige Weise einer Flüssigphasenreaktion erhalten wird; Reagieren des resultierenden Gemisches mit einer wässrigen Carbonatelösung, um Hydrotalcite-Partikel in einem ursprünglichen Zustand zu erhalten; Rühren des Gemisches mit hoher Geschwindigkeit, um fortgeschrittenes Hydrotalcit zu erhalten; und Erlauben, dass das Hydrotalcit steht; und das Gemisch durch Hinzufügen von 2 bis 5 bar eines Inertgases gealtert wird; wobei die Hydrotalcit-Partikel aufweisen:
(1) die allgemeine Formel der chemischen Struktur
[(Mg)_{Y}(Zn)_{Z}]_{1-X}(Al)_{X}(OH)₂(CO₃²⁻)_{(x)/2}·nH₂O,
wobei, x, y, z, und n Werte sind, welche die folgenden Ausdrücke erfüllen:
0,2≤x<0,4, y+z=1, 0,7≤y≤1, 0≤z≤0.3, und 0≤n<1
(2) einen mittleren Primärpartikeldurchmesser von 150 bis 300 nm;
(3) einen mittleren Sekundärpartikeldurchmesser d₅₀, von 0,9 bis 2,5 µm;
(4) eine spezifische Oberfläche, durch das BET-Verfahren gemessen, von 5 bis 40 m²/g;
(5) ein Röntgenbeugungsmuster, in dem die erste Spitze (2θ) in einem Abstand von der unteren Plattenschicht zur oberen Plattenschicht 11,4 bis 11,7 beträgt; die zweite Spitze (2θ) in einem Abstand vom Zwischenschichtmaterial zur Plattenschicht 23 bis 24 ° beträgt; und das Verhältnis des Abstands einer Höhe der ersten Spitze zu jener der zweiten Spitze 2,10 bis 2,65 beträgt.

## Revendications

1. Particules d'hydrotalcite **caractérisées par** les points (1) à (5) suivants :
(1) la formule générale de structure chimique
[(Mg)_{Y}(Zn)_{Z}]_{1-X}(Al)_{X}(OH)₂(CO₃²⁻)_{(X)/2}·nH₂O
dans lesquelles x, y, z et n sont des valeurs qui satisfont aux expressions suivantes :
0,2≤x<0,4, y+z=1, 0,7≤y≤1, 0≤z≤0,3 et 0≤n<1.
(2) les particules d'hydrotalcite présentent le diamètre primaire moyen de particules de 150 à 250 nm ;
(3) les particules d'hydrotalcite présentent le diamètre secondaire moyen de particules (d50) de 1 à 2,5 µm ;
et les particules d'hydrotalcite présentant les caractéristiques suivantes :
(4) les particules d'hydrotalcite présentent une surface spécifique mesurée par un procédé BET de 5 à 40 µm/g ;
(5) les particules d'hydrotalcite présentent un diagramme de diffraction des rayons X dans lequel le premier pic (2θ) à une distance de la couche de plaque inférieure à la couche de plaque supérieure est 11,4 à 11,7°, le second pic (2θ) à une distance du matériau intercouche à la couche de plaque est 23 à 24°, et le rapport de la distance correspondant à la hauteur du premier pic à celle du second pic est 2,10 à 2,65.

2. Processus de préparation de particules d'hydrotalcite des points (1) à (5) suivants, qui se **caractérise par** la dissolution d'un composé aluminium d'une source d'aluminium dans une solution d'hydroxide de sodium aqueuse pour former un ion hydroxyde d'aluminium ; la réaction d'un ion magnésium qui est obtenu par dissolution de la source de magnésium dans de l'eau avec un ion hydroxyde d'aluminium, tel qu'obtenu ci-dessus, par le biais d'une réaction en phase liquide ; la réaction du mélange résultant avec une solution de carbonate aqueuse pour obtenir des particules d'hydrotalcite dans un état initial ; l'agitation du mélange à grande vitesse pour obtenir de l'hydrotalcite plus avancé ; et le repos de l'hydrotalcite ; et 0,2 à 0,3 mole d'une source de magnésium initialement ajoutée et 0,4 à 0,6 mole d'un hydroxyde de sodium initialement ajouté étant en outre ajoutés pour augmenter légèrement la dimension de plaque de l'hydroxyde de magnésium hydraté ; les particules d'hydrotalcite présentant :
(1) la formule générale de structure chimique
[(Mg)_{Y}(Zn)_{Z}]_{1-X}(Al)_{X}(OH)₂(CO₃²⁻)_{(x)/2}·nH₂O,
dans lequel x, y, z et n sont des valeurs qui satisfont aux expressions suivantes :
0,2≤x<0,4, y+z=1, 0,7≤y≤1, 0≤z≤0,3 et 0≤n<1
(2) un diamètre primaire moyen de particules de 150 à 300 nm ;
(3) un diamètre secondaire moyen de particules, d₅₀, de 0,9 à 2,5 µm ;
(4) une surface spécifique mesurée par un procédé BET de 5 à 40 m²/g ;
(5) un diagramme de diffraction des rayons X dans lequel le premier pic (2θ) à une distance de la couche de plaque inférieure à la couche de plaque supérieure est 11,4 à 11,7°, le second pic (2θ) à une distance du matériau intercouche à la couche de plaque est 23 à 24°, et le rapport de la distance correspondant à la hauteur du premier pic à celle du second pic est 2,10 à 2,65.

3. Processus de préparation de particules d'hydrotalcite des points (1) à (5) suivants, qui est **caractérisé par** la dissolution d'un composé aluminium d'une source d'aluminium dans une solution d'hydroxide de sodium aqueuse pour former un ion hydroxyde d'aluminium ; la réaction d'un ion magnésium qui est obtenu par dissolution de la source de magnésium dans de l'eau avec un ion hydroxyde d'aluminium, tel qu'obtenu ci-dessus, par le biais d'une réaction en phase liquide ; la réaction du mélange résultant avec une solution de carbonate aqueuse pour obtenir des particules d'hydrotalcite dans un état initial ; l'agitation du mélange à grande vitesse pour obtenir de l'hydrotalcite plus avancé ; et le repos de l'hydrotalcite ; et le mélange est vieilli avec l'ajout de 2 à 5 bars de gaz inerte ; les particules d'hydrotalcite présentant :
(1) la formule générale de structure chimique
[(Mg)_{Y}(Zn)_{Z}]_{1-X}(Al)_{X}(OH)₂(CO₃²⁻)_{(x)/2}▪nH₂O,
dans lequel x, y, z et n sont des valeurs qui satisfont aux expressions suivantes :
0,2≤x<0,4, y+z=1, 0,7≤y≤1, 0≤z≤0,3 et 0≤n<1
(2) un diamètre primaire moyen de particules de 150 à 300 nm ;
(3) un diamètre secondaire moyen de particules, d₅₀, de 0,9 à 2,5 µm ;
(4) une surface spécifique mesurée par un procédé BET de 5 à 40 m²/g ;
(5) un diagramme de diffraction des rayons X dans lequel le premier pic (2θ) à une distance de la couche de plaque inférieure à la couche de plaque supérieure est 11,4 à 11,7°, le second pic (2θ) à une distance du matériau intercouche à la couche de plaque est 23 à 24°, et le rapport de la distance correspondant à la hauteur du premier pic à celle du second pic est 2,10 à 2,65.
